# EUROPEAN PATENT SPECIFICATION

(11) **EP 3 726 789 B1**
(45) Date of publication and mention of the grant of the patent: **16.09.2026**
(21) Application number: 18888182.5
(22) Date of filing: 21.11.2018
(51) Int. Cl.: H04L 45/24, H04L 47/125, H04L 45/50

(54) **LOAD SHARING METHOD, DEVICE, AND SYSTEM AND COMPUTER READABLE STORAGE MEDIUM**
VERFAHREN, VORRICHTUNG UND SYSTEM ZUR LASTENTEILUNG SOWIE COMPUTERLESBARES SPEICHERMEDIUM
SYSTÈME, DISPOSITIF ET PROCÉDÉ DE PARTAGE DE CHARGE ET SUPPORT DE STOCKAGE LISIBLE PAR ORDINATEUR

(30) Priority: 13.12.2017 CN 201711327736
(43) Date of publication of application: 21.10.2020
(73) Proprietor: ZTE Corporation, Shenzhen, Guangdong 518057 (CN)
(72) Inventor: ZHENG, Kun, Shenzhen, Guangdong 518057 (CN)
(74) Representative: Novagraaf Technologies
(86) International application number: PCT/CN2018/116663
(87) International publication number: WO 2019/114510

(56) References cited:
- CN-A- 106 034 087
- CN-A- 107 046 506
- CN-B- 102 136 989
- CN-B- 104 040 966
- US-A1- 2016 050 141

## Description

### Field of the Invention

The present disclosure relates to the technical field of communications, and in particular, to load sharing methods, an access protocol tunnel encapsulation point, a load balancer on a control plane and computer-readable storage media.

### Background of the Invention

A BRAS (Broadband Remote Access Server) is an access gateway used for broadband network application. It is a bridge between a broadband access network and a backbone network, providing basic access means and management functions of the broadband access network. A BRAS is located at the edge of a network. It provides broadband access service, realizes aggregation and forwarding of various services, can meet requirements of different users for transmission capacity and bandwidth utilization rate, and is thus a core device for broadband user access. For a user who wants access, a BRAS first authenticates the user. If the authentication succeeds, the user is permitted access to the broadband network; if the authentication fails, the user is denied access to the broadband network.

A traditional BRAS has the following disadvantages.
1. A traditional BRAS requires one-by-one device configurations which are dispersed and complicated; traffic provisioning and modification are complicated, and errors may easily occur in the configurations. In this case, traffic provisioning can take a long time and require much personnel support.
2. Because a traditional BRAS is a closed system, research and development on new demands and new services can take a long time and cannot be rapidly launched into the market.
3. Traditional BRAS devices are independent of each other. Each of the BRAS devices is independently responsible for traffic load; load conditions among the devices are different, and the load cannot be balanced among these devices. This leads to inadequate utilization and a waste of resources.

SDN (Software Defined Network) technologies attempt to address the above issues. SDN has three basic technical features: the separation of forwarding and control planes, centralized control, and open interface. The separation of control and forwarding planes and the centralized control can address the issues of complicated configuration and traffic balance, and the open interface can address the issue of rapid launch of new demands and services into market in the case of a long research and development cycle.

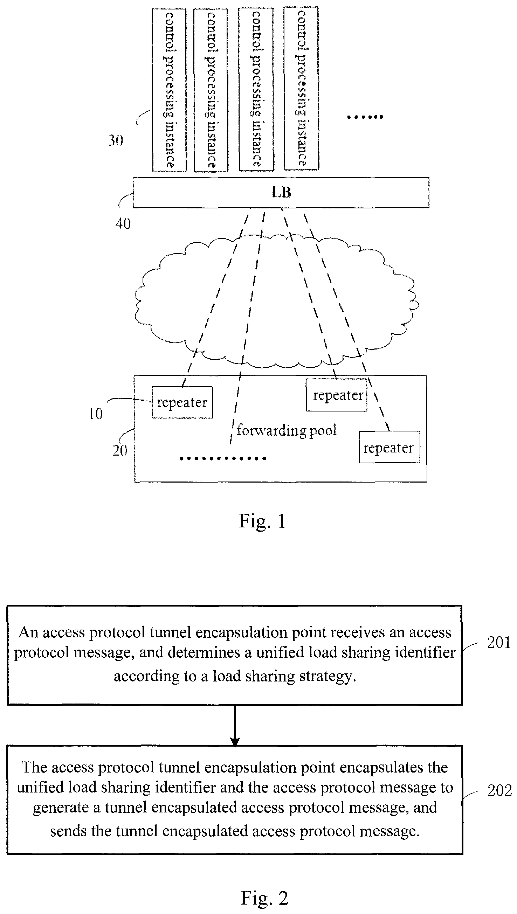

The introduction of SDN into a BRAS forms a Software Defined BRAS (Software Defined Broadband Remote Access Server, SD-BRAS in short). Fig. 1 is a simplified diagram showing deployment of an SD-BRAS. As shown in Fig. 1, a centralized control plane of the SD-BRAS is typically deployed on a universal server; a forwarding plane thereof is deployed on a repeater 10 which constituents a forwarding pool 20; and traffic processing can be loaded on the forwarding pool 20. The centralized control plane is required to control a larger number of repeaters; the centralized control plane therefore adopts a clustered software system which is provided therein with a plurality of control processing instances 30 and is provided at an inlet port thereof with a load balancer (LB) 40. The LB is required to have a strong performance and logic that is as simple as possible. It is also required that addition of new traffic and new functions does not affect the LB, so as to maintain the stability of the LB.

At an SD-BRAS user access stage, an access protocol message is forwarded to the centralized control plane for authentication, authorization, and a keepalive connection. A network exists between the centralized control plane and the repeater. The protocol message traverses the network after being tunnel encapsulated in the repeater. The tunneling technologies include, but are not limited to, GRE (Generic Routing Encapsulation), VxLAN (Virtual Extensible Local Area Network), MPLS (MULTI-Protocol Label Switching), and so on. BRAS access involves numerous access technologies, including, but not limited to: PPPoE (Point to Point Protocol over Ethernet), ARP (Address Resolution Protocol), DHCP (Dynamic Host Configuration Protocol), Layer Three, L2TP (Layer Two Tunnel Protocol), etc. Different load sharing strategies are adopted on the LB of the centralized control plane. These load sharing strategies are for example based on message features, user features, repeater features, and the like. Each load sharing strategy may include multiple sub-strategies which are for example based on message features, possibly based on user MACs (Media Access Control), user IDs (Identifier), or user IPs (Internet Protocol), etc. If these strategies are implemented on the LB, the logic of the LB will inevitably become complicated, which affects performance of the LB; meanwhile, the LB may need to be modified when new traffic is developed, which affects stability of the LB.

US20160050141A1 discloses a packet processing method includes: a traffic classifier receives a first packet; the traffic classifier determines, in policy information in the traffic classifier and according to a first filtering rule that matches the first packet, a first service identifier that matches the first filtering rule, and an address, which matches the first filtering rule, of a first service routing trigger. The traffic classifier sends a second packet to the first service routing trigger. Where the policy information includes: a filtering rule, an address of a service routing trigger, and a service identifier corresponding to the filtering rule. Where the filtering rule is used to identify a packet, and the service identifier is used to represent a sequence of a service node that processes the packet. Where the second packet is formed by adding the first service identifier to the first packet.

CN102136989B discloses a message transmission method, comprising the following steps of: extracting message flow information at a tunnel entrance; carrying out Hash operation on the extracted message flow information; obtaining a TTL (Time To Live) value according to a Hash operation result; encapsulating a message according to the obtained TTL value, and transmitting the encapsulated message, wherein the TTL value is taken as a Hash factor of an intermediate node for sharing load. In the embodiment of the invention, a node at the tunnel entrance completes the Hash operation according to the message flow information and obtains the TTL value according to the Hash operation result, thus the intermediate node can select a load sharing link according to the TTL value, uneven flow distribution as multiple IP message flows are allocated to the same link can be prevented by utilizing the randomness of the TTL value, and the reliability of a system can be enhanced.

### Summary of the Invention

The present invention provides load sharing methods, an access protocol tunnel encapsulation point, a load balancer on a control plane and computer-readable storage media which simplify processing logic of a load balancer (LB) and improve the performance and stability of the LB, as defined by independent claims 1,7,8,9,15 and 17. Further embodiments are defined by their respective dependent claims.

Other features and advantages of the present disclosure will be explained in the following description, and will partly become self-evident from the description, or be understood by implementing the present disclosure. The objectives and other advantages of the present disclosure can be realized and obtained by structures particularly pointed out in the description, claims, and drawings.

### Brief Description of the Drawings

The accompanying drawings, as a part of the description, are provided for further understanding technical solutions of the present disclosure and for explaining the technical solutions of the present disclosure in conjunction with embodiments of the present disclosure. The accompanying drawings shall not be construed as limitations to the technical solutions of the present disclosure.
Fig. 1 is a simplified schematic diagram showing deployment of a repeater and a control plane in a related art;
Fig. 2 is a flowchart of a loading sharing method provided by an embodiment of the present disclosure;
Fig. 3 is a flowchart of a loading sharing method provided by another embodiment of the present disclosure;
Fig. 4 is a block diagram showing a loading sharing device provided by an embodiment of the present disclosure;
Fig. 5 is a block diagram showing a loading sharing device provided by another embodiment of the present disclosure;
Fig. 6 is a flowchart of a loading sharing method provided by further another embodiment of the present disclosure;
Fig. 7 is a schematic diagram showing PPPoE user access to deployed networking;
Fig. 8 is a flowchart of PPPoE user access;
Fig. 9 is a flowchart of PPPoE user keepalive;
Fig. 10 is a schematic diagram showing DHCP user access to deployed networking;
Fig. 11 is a flowchart of DHCP user access;
Fig. 12 is a flowchart of DHCP user keepalive;
Fig. 13 is a schematic diagram showing L2TP user access to deployed networking;
Fig. 14 is a flowchart of L2TP user access;
Fig. 15 is a schematic diagram showing Layer three user access to deployed networking;
Fig. 16 is a flowchart of Layer three user access; and
Fig. 17 is a block diagram showing a loading sharing device provided by another embodiment of the present disclosure.

### Detailed Description of the Embodiments

Embodiments of the present disclosure are described in detail below in connection with the accompanying drawings to make objectives, technical solutions, and advantages of the present disclosure clearer. It shall be noted that, in the case that no conflicts can be caused, the embodiments of the present disclosure as well as features of these embodiments may be combined with one another.

Steps shown in the flowcharts of the accompanying drawings may be performed in a computer system such as a set of computer-executable instructions. Also, although a logical order is shown in the flowcharts, in some cases, the steps shown or described may be performed in an order different from that described herein.

In a technical solution of one embodiment of the present disclosure, separation of forwarding and control is adopted. Before a protocol message is sent to a control plane, a unified load sharing identifier is determined according to a load sharing strategy at an access protocol tunnel encapsulation point; the unified load sharing identifier is encapsulated into the access protocol message; the access protocol message is then tunnel encapsulated to generate a tunnel encapsulated access protocol message; the tunnel encapsulated access protocol message is forwarded to a load balancer (LB) on the control plane; the LB on the control plane extracts the unified load sharing identifier from the tunnel encapsulated protocol message; and then the LB on the control plane shares load of the access protocol message to a control processing instance based on the unified load sharing identifier.

Fig. 2 is a flowchart of a load sharing method provided by an embodiment of the present disclosure. As shown in Fig. 2, the method includes the following steps.

In step 201, an access protocol tunnel encapsulation point receives an access protocol message, and determines a unified load sharing identifier according to a load sharing strategy.

In step 202, the access protocol tunnel encapsulation point encapsulates the unified load sharing identifier and the access protocol message to generate a tunnel encapsulated access protocol message, and sends the tunnel encapsulated access protocol message.

The encapsulation may be performed in such a way. The access protocol tunnel encapsulation point encapsulates the unified load sharing identifier into the access protocol message, and performs tunnel encapsulation on the access protocol message with the encapsulated unified load sharing identifier to generate a tunnel encapsulated access protocol message. This, of course, is only an example, and the encapsulation may be performed in other ways.

In one embodiment, in step 201, the determining of the unified load sharing identifier according to the load sharing strategy includes:
acquiring a matching feature value according to a matching strategy of the load sharing strategy, and determining the unified load sharing identifier based on the matching feature value.

In one embodiment, the access protocol tunnel encapsulation point may acquire the load sharing strategy from a load balancer (LB) on a control plane, and of course, may also acquire the load sharing strategy from other network elements, such as a network management system and the like. Or, the load sharing strategy may be pre-configured at the access protocol tunnel encapsulation point.

In one embodiment, the load sharing strategy includes a matching strategy and an action strategy.

The matching strategy includes a strategy for extracting a matching feature value. For example, if the matching strategy requires that a source MAC be extracted as a matching feature value, then, after an access protocol message is received, a source MAC of the access protocol message is extracted as a matching feature value.

The action strategy includes a generation type for generating a unified load sharing identifier (for example, an algorithm for generating a unified load sharing identifier, etc.) based on a matching feature value. In an alternative embodiment, a unified load sharing identifier generated based on the algorithm exhibits randomness to ensure that load sharing is as uniform as possible.

The matching feature value includes one or a combination of the following: a message feature, a user feature, and a repeater feature. Of course, this is only an example, and the matching feature value may also be information of other features. The message feature includes one or a combination of the following: a MAC address of the message, VLAN (Virtual Local Area Network) encapsulation information, IP address, TCP (Transmission Control Protocol) information, UDP (User Datagram Protocol) port number. The message feature here is a feature of an access protocol message. The user feature includes one or a combination of the following: an identifier in protocol load, such as a user ID, an option for identifying a user, etc., which can be obtained from the access protocol message. The repeater feature includes one or a combination of the following: a repeater ID, a repeater interface, etc. The repeater feature is a feature of an access protocol tunnel encapsulation point, and is for example an ID of the access protocol tunnel encapsulation point, an interface of the access protocol tunnel encapsulation point, etc.

Provided may be one or more load sharing strategies. Each of the load sharing strategies may have a priority attribute. In one embodiment, a higher-priority load sharing strategy is implemented first.

In one embodiment, the acquiring of the matching feature value according to the matching strategy of the load sharing strategy includes:
traversing matching strategies of all load sharing strategies in an order of from a higher-priority load sharing strategy to a lower-priority load sharing strategy to generate matching feature values; ignoring a matching strategy if a matching feature value cannot be generated according to the matching strategy; and discarding the access protocol message when no matching feature value can be generated according to all the matching strategies.

A plurality of matching feature values may be generated. Each of the matching feature values has priority inherited from priority of a load sharing strategy to which a matching strategy according to which the matching feature value is generated belongs.

It shall be noted that, the matching feature value may also be generated not in order of priority, but in a random order according to the matching strategy.

In one embodiment, the determining of the unified load sharing identifier based on the matching feature value includes:
acquiring a unified load sharing identifier corresponding to the matching feature value based on the matching feature value; generating the unified load sharing identifier according to an action strategy of the load sharing strategy to which the matching strategy according to which the matching feature value is generated belongs, if none of matching feature values of the access protocol message is found to have a corresponding unified load sharing identifier; and saving a correspondence relationship between the matching feature value and the generated unified load sharing identifier. A load sharing strategy includes a matching strategy and an action strategy, and therefore the load sharing strategy to which the matching strategy belongs is the load sharing strategy including the matching strategy.

In one embodiment, the acquiring of the unified load sharing identifier corresponding to the matching feature value based on the matching feature value includes:
querying a unified load sharing identifier corresponding to the matching feature value in an order of from a higher-priority matching feature value to a lower-priority matching feature value, and ending the querying after a corresponding unified load sharing identifier is acquired for the first time. That is, once a corresponding unified load sharing identifier is acquired, the querying is ended. Take three matching feature values of high priority, medium priority, and low priority as an example. Corresponding unified load sharing identifiers are queried in an order of high, medium, and low priority. If a load sharing uniform identifier corresponding to the high-priority matching feature value is acquired, unified load sharing identifiers corresponding to the medium- and low-priority matching feature values are no longer queried. Of course, in other embodiments, a unified load sharing identifier corresponding to each of matching feature values can be queried, and among the acquired unified load sharing identifiers, a unified load sharing identifier corresponding to a highest-priority matching feature value is used as the unified load sharing identifier to be encapsulated into the access protocol message.

In one embodiment, the generating of the unified load sharing identifier according to the action strategy of the load sharing strategy to which the matching strategy according to which the matching feature value is generated belongs includes:
generating the unified load sharing identifier according to an action strategy of a load sharing strategy to which a matching strategy according to which a highest- priority matching feature value is generated belongs.

That is, if no corresponding unified load sharing identifier is acquired, a unified load sharing identifier is directly generated based on the matching feature value. In this case, a highest-priority matching feature value may be selected to generate the unified load sharing identifier. Of course, in other embodiments, other matching feature values may also be selected as needed to generate a unified load sharing identifier, and the present disclosure is not limited in this respect.

It shall be noted that the above description is about the situation where priority exists. If the matching feature values have no priority attribute or the matching feature values have same priority, a matching feature value is arbitrarily selected for querying its corresponding unified load sharing identifier or a unified load sharing identifier is generated based on the selected matching feature value.

In one embodiment, when the unified load sharing identifier is encapsulated into the access protocol message, the encapsulation is performed using encapsulation protocols including but not limited to NSH (Network Service Header) extension, tunnel protocol extension, etc. Among them, NSH is a new type of traffic plane protocol, which has good extendability and can carry custom information through an option field in the protocol. The tunnel encapsulation includes but is not limited to GRE, VxLAN, MPLS and so on.

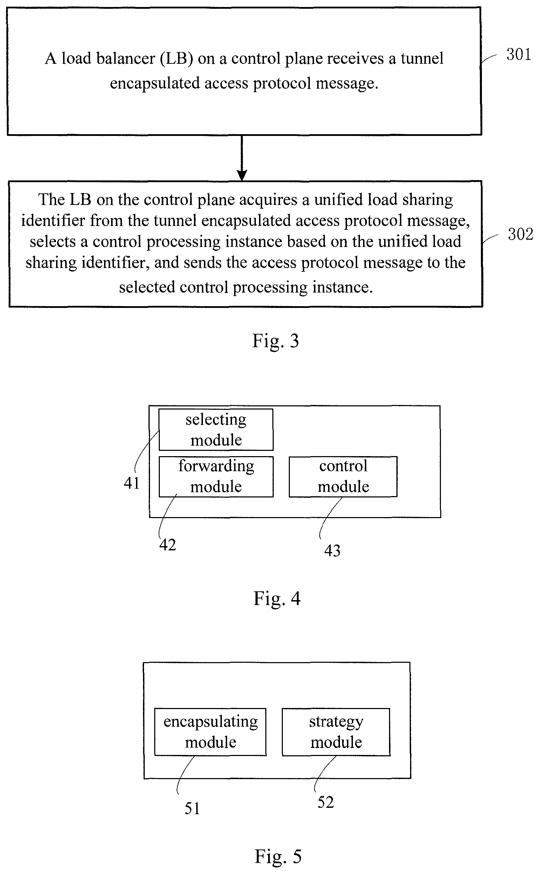

Fig. 3 is a flowchart of a load sharing method provided by another embodiment of the present disclosure. As shown in Fig. 3, the method includes the following steps.

In step 301, a load balancer (LB) on a control plane receives a tunnel encapsulated access protocol message from an access protocol tunnel encapsulation point.

In step 302, the LB on the control plane decapsulates the tunnel encapsulated access protocol message to obtain a unified load sharing identifier and an access protocol message, selects a control processing instance based on the unified load sharing identifier, and sends the access protocol message to the selected control processing instance.

In one embodiment, in step 302, the selecting of the control processing instance based on the unified load sharing identifier includes:
processing the unified load sharing identifier by using a preset load sharing algorithm, and then selecting the control processing instance based on a processing result. For example, a hash operation is performed on the unified load sharing identifier. Of course, this is only an example, and the preset load sharing algorithm may also be other algorithms, and the present disclosure is not limited in this respect.

In one embodiment, the method further includes: configuring a load sharing strategy and sending the load sharing strategy to the access protocol tunnel encapsulation point, by the LB on the control plane. The load sharing strategy includes a matching strategy and an action strategy. The matching strategy includes a strategy for extracting a matching feature value. The action strategy includes a generation type for generating a unified load sharing identifier based on an extracted matching feature value. Configured may be one or more load sharing strategies. Each of the load sharing strategies has a priority attribute. The configured load sharing strategy can specify a specific access protocol tunnel encapsulation point.

In an alternative embodiment, the load sharing strategy may be issued to the access protocol tunnel encapsulation point by using one of the following protocols: openflow protocol, NetConf protocol, SNMP (Simple Network Management Protocol), etc. One or more load sharing strategies may be issued to an access protocol tunnel encapsulation point.

In this embodiment, the LB of the control plane performs load sharing based on the unified load sharing identifier without processing a specific load sharing strategy, which simplifies processing logic of the LB and ensures the stability and performance of the LB on the control plane. Furthermore, the stability and performance of the LB will not be affected by subsequent addition of functions.

Fig. 4 is a block diagram of a load sharing device provided by an embodiment of the present disclosure. As shown in Fig. 4, the load sharing device includes a selecting module 41 and a forwarding module 42.

The selecting module 41 is configured to receive a tunnel encapsulated access protocol message from an access protocol tunnel encapsulation point, decapsulate the tunnel encapsulated access protocol message to obtain a unified load sharing identifier and an access protocol message, select a control processing instance based on the unified load sharing identifier, and sends the selected control processing instance and the access protocol message to the forwarding module 42.

The forwarding module 42 is configured to send the access protocol message to the control processing instance selected by the selecting module 41.

In one embodiment, the load sharing device further includes a control module 43, which is configured to configure a load sharing strategy and send the load sharing strategy to the access protocol tunnel encapsulation point.

In one embodiment, the selecting of the control processing instance based on the unified load sharing identifier by the selecting module 41 includes:
processing the unified load sharing identifier by using a preset load sharing algorithm and then selecting the control processing instance based on a processing result, by the selecting module 41. The preset load sharing algorithm includes, but is not limited to, performing a hash operation on the unified load sharing identifier. After the hash operation is performed on the unified load sharing identifier, the unified load sharing identifier can be mapped to a control processing instance, which is the selected control processing instance.

In one embodiment, the control module 43 may configure one or more load sharing strategies. Each of the load sharing strategies may have a priority attribute, and a higher-priority load sharing strategy is implemented first. The configured load sharing strategy can specify a specific access protocol tunnel encapsulation point.

It shall be noted that, in other embodiments, the control module 43 may not be included.

The load sharing device provided by the above embodiment may be located on a load balancer (LB) on a control plane.

Fig. 5 is a block diagram of a load sharing device provided by another embodiment of the present disclosure. As shown in Fig. 5, the load sharing device includes an encapsulating module 51 and a strategy module 52.

The encapsulating module 51 is configured to receive an access protocol message, acquire a load sharing strategy from the strategy module, determine a unified load sharing identifier according to the load sharing strategy, encapsulate the unified load sharing identifier and an access protocol message to generate a tunnel encapsulated access protocol message, and send the tunnel encapsulated access protocol message.

The strategy module 52 is configured to store the load sharing strategy and send the load sharing strategy to the encapsulating module 51.

In one embodiment, the determining of the unified load sharing identifier according to the load sharing strategy by the encapsulating module 51 includes:
acquiring a matching feature value according to a matching strategy of the load sharing strategy, and determining the unified load sharing identifier based on the matching feature value, by the encapsulating module 51.

In one embodiment, the acquiring of the matching feature value according to the matching strategy of the load sharing strategy by the encapsulating module 51 includes:
generating the matching feature value according to the matching strategy of the load sharing strategy by the encapsulating module 51. Specifically, matching strategies of all load sharing strategies are traversed in an order of from a higher-priority load sharing strategy to a lower-priority load sharing strategy to generate a matching feature value; a matching strategy is ignored if a matching feature value cannot be generated according to the matching strategy; and the access protocol message is discarded when no matching feature value can be generated according to all the matching strategies. A plurality of matching feature values may be generated, and each of the matching feature values has priority inherited from priority of a load sharing strategy to which a matching strategy according to which the matching feature value is generated belongs

In one embodiment, the acquiring of the unified load sharing identifier based on the matching feature value by the encapsulating module 51 includes:
querying the strategy module for the unified load sharing identifier corresponding to the matching feature value based on the matching feature value, and receiving the unified load sharing identifier corresponding to the matching feature value returned by the strategy module, by the encapsulating module 51; generating the unified load sharing identifier according to an action strategy of a load sharing strategy to which a matching strategy according to which the matching feature value is generated belongs, if none of matching feature values of the access protocol message is found to have a corresponding unified load sharing identifier; and sending a correspondence relationship between the matching feature value and the generated unified load sharing identifier to the strategy module 52.

The strategy module 52 is further configured to, return to the encapsulating module the unified load sharing identifier corresponding to the matching feature value, or return to the encapsulating module 51 a message, for example, an empty message indicating that there is no corresponding unified load sharing identifier, after receiving a query request from the encapsulating module 51; and receive and then save a correspondence relationship between the matching feature value and the generated unified load sharing identifier. In other words, the strategy module 52 provides an interface for querying the unified load sharing identifier based on the matching feature value and an interface for querying the load sharing strategy.

In one embodiment, the querying, by the encapsulating module 51, the strategy module for the unified load sharing identifier corresponding to the matching feature value based on the matching feature value includes:
generating the unified load sharing identifier according to an action strategy of a load sharing strategy to which a matching strategy according to which a highest-priority matching feature value is generated belongs.

In one embodiment, generating the unified load sharing identifier by the encapsulating module 51 according to the action strategy of the load sharing strategy to which the matching strategy according to which the matching feature value is generated belongs includes:
querying, by the encapsulating module 51, the strategy module for the unified load sharing identifier corresponding to the matching feature value in an order of from a higher-priority matching feature value to a lower-priority matching feature value, and ending the querying after a corresponding unified load sharing identifier is acquired for the first time.

In one embodiment, after querying the strategy module 52 for the load sharing strategy, the encapsulating module 51 receives a query result about the load sharing strategy returned by the strategy module 52. The query result about the load sharing strategy may include a plurality of records.

In one embodiment, the strategy module 52 may receive and save a plurality of load sharing strategies.

For other technical details of the load sharing device, please refer to the above-described method embodiments, which will not be repeated herein.

The load sharing device provided by the embodiment shown in Fig. 5 may be provided at an access protocol tunnel encapsulation point. Specific device types at the access protocol tunnel encapsulation point include but are not limited to: OLT (Optical Line Terminal), BRAS, switch, etc.

An embodiment of the present disclosure provides a load sharing method. The method includes the following steps.

An access protocol tunnel encapsulation point receives an access protocol message and determines a unified load sharing identifier according to a load sharing strategy.

The access protocol tunnel encapsulation point encapsulates the unified load sharing identifier and the access protocol message to generate a tunnel encapsulated access protocol message, and sends the tunnel encapsulated access protocol message to a load balancer on a control plane.

The load balancer on the control plane receives the tunnel encapsulated access protocol message, decapsulates the tunnel encapsulated access protocol message to obtain a unified load sharing identifier and an access protocol message, selects a control processing instance based on the unified load sharing identifier, and sends the access protocol message to the selected control processing instance.

For technical details of the access protocol tunnel encapsulation point and the load balancer on the control plane in the above solution, please refer to relevant descriptions of the access protocol tunnel encapsulation point and the load balancer on the control plane described in the foregoing method embodiments, which will not be repeated herein.

An embodiment of the present disclosure provides a load sharing system. The load sharing system includes an access protocol tunnel encapsulation point and a load balancer on a control plane.

The access protocol tunnel encapsulation point is configured to receive an access protocol message, determine a unified load sharing identifier according to a load sharing strategy, encapsulate the unified load sharing identifier into the access protocol message, perform tunnel encapsulation on the access protocol message with the encapsulated unified load sharing identifier to generate a tunnel encapsulated access protocol message, and send the tunnel encapsulated access protocol message to a load balancer on a control plane.

The load balancer on the control plane is configured to receive the tunnel encapsulated access protocol message, decapsulate the tunnel encapsulated access protocol message to obtain a unified load sharing identifier and an access protocol message, select a control processing instance based on the unified load sharing identifier, and send the access protocol message to the selected control processing instance.

For other functions of the access protocol tunnel encapsulation point, please refer to the load sharing device shown in Fig. 5, which will not be repeated herein. For other functions of the load balancer on the control plane, please refer to the load sharing device shown in Fig. 4, which will not be repeated herein.

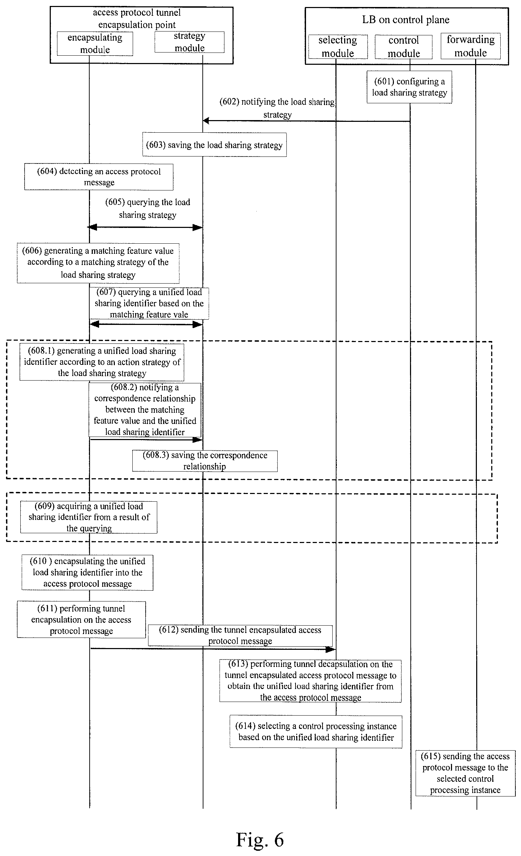

Fig. 6 is a flowchart of a load sharing method provided by an embodiment of the present disclosure. As shown in Fig. 6, the load sharing method includes the following steps.

In step 601, a control module of a load balancer (LB) on a control plane configures a load sharing strategy.

The load sharing strategy includes a matching strategy and an action strategy. Among them, a plurality of load sharing strategies can be configured; each load sharing strategy has a priority attribute; and a higher-priority load sharing strategy is implemented first.

Of course, the load sharing strategies may not have a priority attribute, which means the load sharing strategies have same priority.

In step 602, the control module of LB on the control plane notifies a strategy module at the access protocol tunnel encapsulation point of the configured load sharing strategy.

In step 603, after receiving the load sharing strategy, the strategy module at the access protocol tunnel encapsulation point saves the load sharing strategy locally.

The strategy module may receive and save a plurality of load sharing strategies.

In step 604, an encapsulating module at the access protocol tunnel encapsulation point detects an access protocol message.

In step 605, the encapsulating module at the access protocol tunnel encapsulation point queries the strategy module at the access protocol tunnel encapsulation point for the load sharing strategy, and receives the load sharing strategy returned by the strategy module.

The strategy module may return a plurality of load sharing strategies.

In step 606, the encapsulating module at the access protocol tunnel encapsulation point acquires a matching strategy from all acquired load sharing strategies, and generates a matching feature value based on the access protocol message, route information of the message, etc.

Specifically, all matching strategies are traversed in an order of from a higher priority to a lower priority to generate matching feature values. A matching strategy is ignored if a matching feature value cannot be generated according to the matching strategy; and the access protocol message is discarded when no matching feature value can be generated according to all the matching strategies.

In step 607, the encapsulating module at the access protocol tunnel encapsulation point traverses all matching feature values in an order of from a higher priority to a lower priority, queries the strategy module at the access protocol tunnel encapsulation point for a unified load sharing identifier, ends the querying after a unified load sharing identifier is found for the first time, and acquires the found unified load sharing identifier. If the encapsulating module at the access protocol tunnel encapsulation point returns an empty result about querying the unified load sharing identifier, namely none of the matching feature values is found a corresponding unified load sharing identifier, perform step 608.1; if the encapsulating module at the access protocol tunnel encapsulation point acquires a unified load sharing identifier, perform step 609.

In step 608.1, the encapsulating module at the access protocol tunnel encapsulation point generates a unified load sharing identifier according to an action strategy of the load sharing strategy, and saves a correspondence relationship between the matching feature value and the unified load sharing identifier.

In step 608.2, the encapsulating module at the access protocol tunnel encapsulation point notifies the strategy module at the access protocol tunnel encapsulation point of the correspondence relationship between the matching feature value and the unified load sharing identifier.

In step 608.3, the strategy module at the access protocol tunnel encapsulation point receives the corresponding relationship between the matching feature value and the unified load sharing identifier, and generates a correspondence relationship record and saves it locally. The method then goes to step 610.

In step 609, the encapsulating module at the access protocol tunnel encapsulation point acquires a unified load sharing identifier from a result of the querying.

In step 610, the encapsulating module at the access protocol tunnel encapsulation point encapsulates the unified load sharing identifier into the access protocol message.

In one embodiment, an encapsulation protocol such as NSH is used for the encapsulation.

In step 611, the encapsulating module at the access protocol tunnel encapsulation point performs tunnel encapsulation on the access protocol message to generate a tunnel encapsulated access protocol message.

The tunnel encapsulation includes but is not limited to GRE, VxLAN, MPLS, etc.

In step 612, the encapsulating module at the access protocol tunnel encapsulation point sends the tunnel encapsulated access protocol message to a selecting module of the LB on the control plane.

In step 613, the selecting module of the LB on the control plane performs tunnel decapsulation on the tunnel encapsulated access protocol message to obtain the access protocol message and the unified load sharing identifier.

In step 614, the selecting module of the LB on the control plane performs a load sharing algorithm based on the unified load sharing identifier to select a control processing instance.

The load sharing algorithm includes but is not limited to performing a hash operation on the unified load sharing identifier.

In step 615, a forwarding module of the LB on the control plane sends the access protocol message to the selected control processing instance.

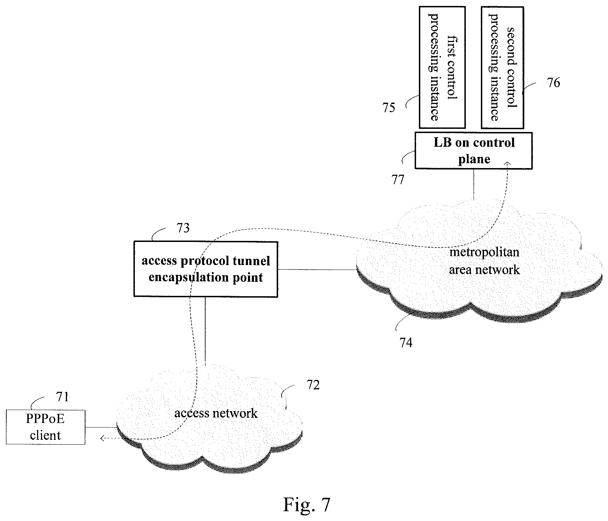

Fig. 7 is a diagram showing PPPoE user access to a deployed networking. As shown in Fig. 7, a PPPoE client 71 is connected to an access protocol tunnel encapsulation point 73 through an access network 72, and a control plane is in a data center on a metropolitan area network 74. A VxLAN tunnel is established between the control plane and the access protocol tunnel encapsulation point. The control plane are provided with a plurality of control processing instances (such as a first control processing instance 75 and a second control processing instance 76 shown in Fig. 7). PPPoE protocol message load is shared to the control processing instances through an LB 77 on the control plane for processing.

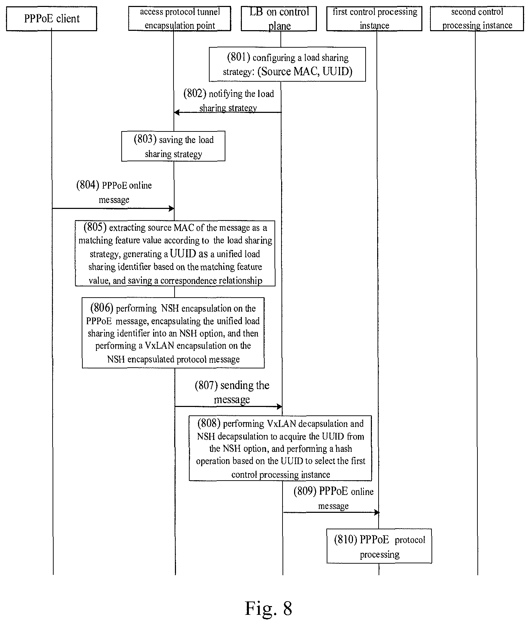

Fig. 8 is a flowchart of a PPPoE client access process provided by an embodiment of the present disclosure. This embodiment is based on the networking architecture shown in Fig. 7. As shown in Fig. 8, a load sharing method for the PPPoE client access provided by this embodiment includes the following steps.

In step 801, the LB 77 on the control plane configures a load sharing strategy. A matching strategy of the load sharing strategy is to extract a source MAC of a message as a matching feature value, and an action strategy thereof is to generate a UUID (Universally Unique Identifier) as a unified load sharing identifier.

A specific algorithm for generating the UUID based on the source MAC may be selected as needed, as long as it is ensured that a result generated is a unique identifier.

In step 802, the LB 77 on the control plane notifies the access protocol tunnel encapsulation point 73 of the load sharing strategy.

In step 803, the access protocol tunnel encapsulation point 73 receives and stores the load sharing strategy.

In step 804, the PPPoE client 71 goes online and sends a PPPoE online message.

In step 805, after receiving the PPPoE online message, the access protocol tunnel encapsulation point 73 extracts a source MAC of the PPPoE online message as a matching feature value based on the load sharing strategy, and queries a unified load sharing identifier based on the extracted source MAC. In this embodiment, if the querying produces an empty result, a UUID is generated as a unified load sharing identifier based on the extracted source MAC, and a correspondence relationship between the source MAC and the UUID is saved.

In step 806, the access protocol tunnel encapsulation point 73 uses NSH encapsulation to encapsulate the PPPoE online message, encapsulates the UUID as the unified load sharing identifier into an NSH option, and then perform a VxLAN encapsulation on the NSH encapsulated PPPoE online message to generate a VxLAN+NSH encapsulated PPPoE online message.

In step 807, the access protocol tunnel encapsulation point 73 sends the VxLAN+NSH encapsulated PPPoE online message to the LB 77 on the control plane.

In step 808, the LB 77 on the control plane performs VxLAN decapsulation and NSH decapsulation on the PPPoE online message to obtain the PPPoE online message and acquire the UUID from the NSH option, and performs a hash operation based on the UUID to select the first control processing instance 75.

In step 809, the LB 77 on the control plane sends the PPPoE online message to the first control processing instance 75.

In step 810, the first control processing instance 75 performs PPPoE protocol online protocol processing based on the PPPoE online message.

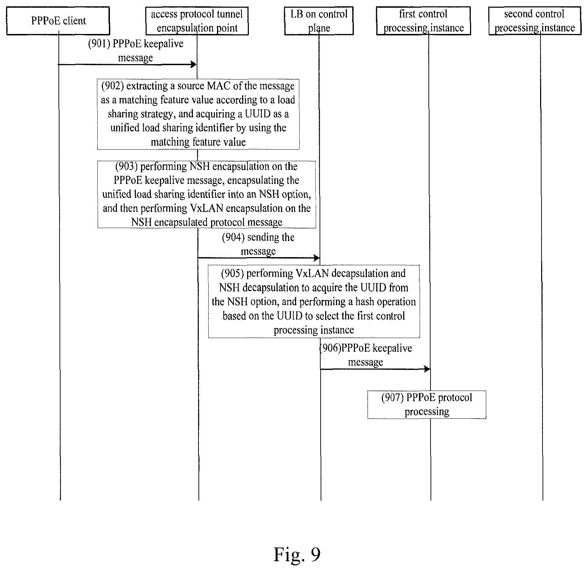

Fig. 9 is a schematic diagram showing a PPPoE client keepalive process provided by an embodiment of the present disclosure. This embodiment is based on the networking architecture shown in Fig. 7. As shown in Fig. 9, the process includes the following steps.

In step 901, the PPPoE client 71 sends a PPPoE keepalive message.

In step 902, the access protocol tunnel encapsulation point 73 extracts a source MAC of the PPPoE keepalive message as a matching feature value according to a load sharing strategy, and acquires a UUID generated at a go-online stage as a unified load sharing identifier by using the source MAC.

In step 903, the access protocol tunnel encapsulation point 73 uses NSH encapsulation to encapsulate the PPPoE keepalive message, encapsulates the UUID as the unified load sharing identifier into an NSH option, and then performs VxLAN encapsulation on the NSH encapsulated PPPoE keepalive message.

In step 904, the access protocol tunnel encapsulation point 73 sends the VxLAN+NSH encapsulated PPPoE keepalive message to the LB 77 on the control plane.

In step 905, the LB 77 on the control plane performs VxLAN decapsulation and NSH decapsulation on the received PPPoE keepalive message, and acquires the UUID from the NSH option. Since the UUID at a keepalive stage is the same as the UUID at the go-online stage, the first control processing instance 75 is still selected after a hash operation based on the UUID.

In step 906, the LB 77 on the control plane sends the PPPoE keepalive message to the first control processing instance 75.

In step 907, the first control processing instance 75 performs PPPoE protocol keepalive protocol processing based on the PPPoE keepalive message.

For different PPPoE clients, MACs are different and source MACs of encapsulated PPPoE protocol messages are different, and therefore, corresponding UUIDs as unified load sharing identifiers are also different. Load of protocol messages can be shared to different control processing instances by using different UUIDs. An interactive processing flow is the same as the above flow and will not be repeated herein.

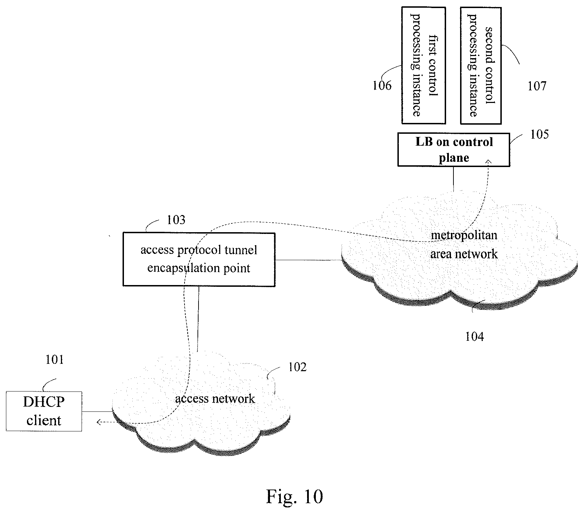

Fig. 10 is a diagram showing DHCP user access to deployed networking. As shown in Fig. 10, a DHCP client 101 is connected to an access protocol tunnel encapsulation point 103 through an access network 102, and a control plane is in a data center of a metropolitan area network 104. A VxLAN tunnel is established between the control plane and the access protocol tunnel encapsulation point 103. The control plane is provided thereon with a plurality of control processing instances (such as a first control processing instance 106 and a second control processing instance 107 shown in Fig. 10). Load of a DHCP protocol message is shared to the control processing instance by way of a load balancer (LB) 105 on the control plane.

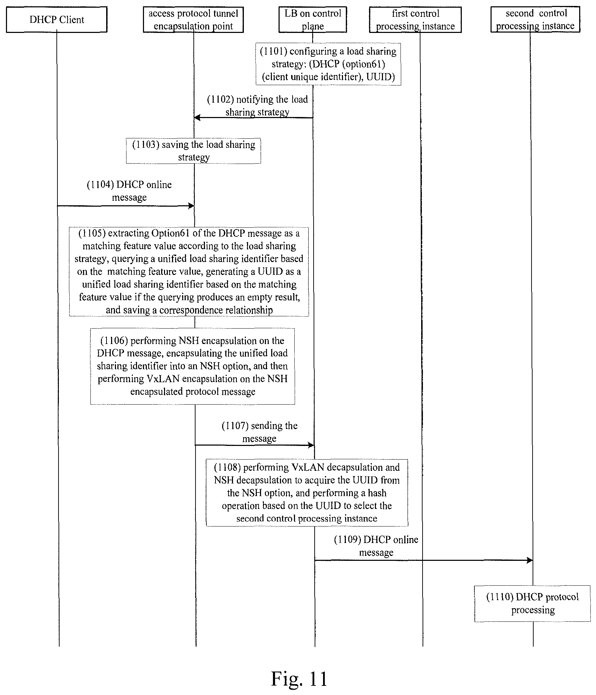

Fig. 11 is a schematic diagram showing a DHCP client access process provided by an embodiment of the present disclosure. This embodiment is based on the networking architecture shown in Fig. 10. As shown in Fig. 11, the process includes the following steps.

In step 1101, the LB 105 on the control plane configures a load sharing strategy. A matching strategy is an option content value of DHCP Option61, and an action strategy is to generate a UUID as a unified load sharing identifier. The option content value of DHCP Option61 is a DHCP client unique identifier, which can uniquely identify a DHCP client.

In step 1102, the LB 105 on the control plane notifies the access protocol tunnel encapsulation point 103 of the load sharing strategy.

In step 1103, the access protocol tunnel encapsulation point 103 receives the load sharing strategy and saves it locally.

In step 1104, the DHCP client 101 goes online and sends a DHCP online message.

In step 1105, the access protocol tunnel encapsulation point 103 extracts Option61 option content of the DHCP online message as a matching feature value according to the load sharing strategy, and queries a unified load sharing identifier based on the Option61 option content. In this embodiment, if the querying produces an empty result, a UUID is generated as a unified load sharing identifier based on the Option61 option content, and a correspondence relationship between the Option61 option content and the UUID is saved.

In step 1106, the access protocol tunnel encapsulation point 103 performs NSH encapsulation on the DHCP online message, encapsulates the UUID as a unified load sharing identifier into an NSH option, and then performs VxLAN encapsulation on the NSH encapsulated DHCP online message to generate a VxLAN+NSH encapsulated DHCP online message.

In step 1107, the access protocol tunnel encapsulation point 103 sends the VxLAN+NSH encapsulated DHCP online message to the LB 105 on the control plane.

In step 1108, the LB 105 on the control plane performs VxLAN decapsulation and NSH decapsulation to obtain the DHCP online message and acquire the UUID from the NSH option, and performs a hash operation based on the UUID to select the second control processing instance 107.

In step 1109, the LB 105 on the control plane sends the DHCP online message to the second control processing instance 107.

In step 1110, the second control processing instance 107 performs PPPoE protocol online protocol processing based on the DHCP online message.

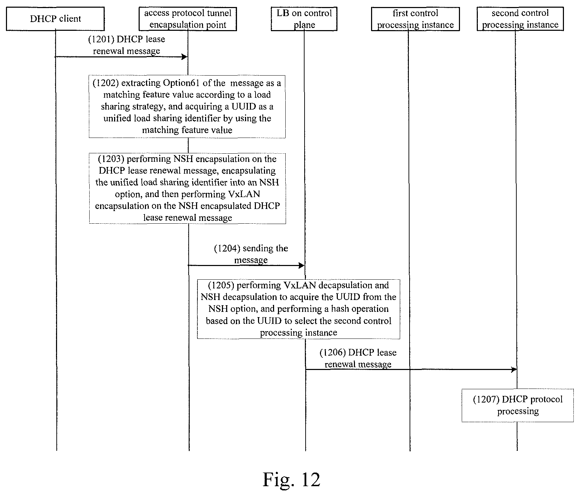

Fig. 12 is a schematic diagram showing a DHCP client lease renewal process provided by an embodiment of the present disclosure. This embodiment is based on the networking architecture shown in Fig. 10. As shown in Fig. 12, the process includes the following steps.

In step 1201, the DHCP client 101 sends a DHCP lease renewal message to the access protocol tunnel encapsulation point 103.

In step 1202, the access protocol tunnel encapsulation point 103 extracts an Option61 content value of the DHCP lease renewal message as a matching feature value according to the load sharing strategy, and acquires a UUID generated at a go-online stage as a unified load sharing identifier by using the matching feature value.

In the embodiment shown in Fig. 11, the DHCP client has already generated the UUID based on the Option61 content value at the go-online stage, and has saved the correspondence relationship between the Option61 content value and the UUID; therefore, here the UUID can be acquired simply by querying based on the Option61 content value, and then the UUID is used as the unified load sharing identifier.

In step 1203, the access protocol tunnel encapsulation point 103 performs NSH encapsulation on the DHCP lease renewal message, encapsulates the UUID as the unified load sharing identifier into an NSH option, and then performs VxLAN encapsulation on the NSH encapsulated DHCP lease renewal message to generate a VxLAN+NSH encapsulated DHCP lease renewal message.

In step 1204, the access protocol tunnel encapsulation point 103 sends the VxLAN+NSH encapsulated DHCP lease renewal message to the LB 105 on the control plane.

In step 1205, the LB 105 on the control plane performs VxLAN decapsulation and NSH decapsulation to obtain the DHCP lease renewal message and acquire the UUID from the NSH option. Since the UUID at a lease renewal stage is the same as the UUID at the go-online stage, a same control processing instance namely the second control processing instance 107 is still selected after a hash operation based on the UUID.

In step 1206, the LB 105 on the control plane sends the DHCP lease renewal message to the second control processing instance 107.

In step 1207, the second control processing instance 107 performs DHCP lease renewal protocol processing based on the DHCP lease renewal message.

For different DHCP clients, client identifiers are different and Option61 options of encapsulated DHCP protocol messages are different, and therefore, corresponding UUIDs as unified load sharing identifiers are also different. Load of DHCP protocol messages can be shared to different control processing instances by using different UUIDs. An interactive processing flow is the same as the above flow and will not be repeated herein.

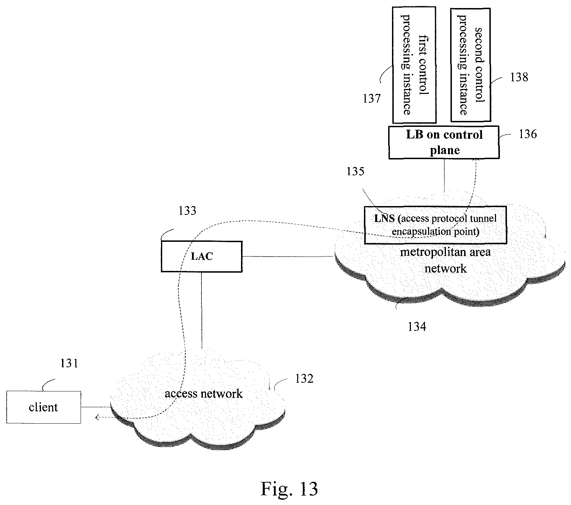

Fig. 13 is a diagram showing L2TP user access to deployed networking. As shown in Fig. 13, included are a client 131, an access network 132, an LAC (L2TP Access Concentrator) 133, and an LNS (L2TP Network Server) 135. The LNS 135 is located in a metropolitan area network 134 and serves as an access protocol tunnel encapsulation point. A control plane of the LNS 135 is in a data center of the metropolitan area network. When user dial-up access is initiated, a tunnel/session negotiation is conducted between the LAC 133 and the LNS 135. VxLAN tunnel encapsulation is performed on a negotiation protocol message at the LNS 135. A VxLAN tunnel is terminated on a load balancer (LB) 136 on the control plane in the data center. The LB 136 on the control plane decapsulates the VxLAN encapsulated message to acquire the tunnel/session negotiation protocol message of L2TP. Load of the protocol message is shared to a control processing instance by way of the LB 136 on the control plane. Tunnel/session negotiation processing is performed in the control processing instance to establish a tunnel/session between the LAC and the LNS. In this embodiment, a first control processing instance 137 and a second control processing instance 138 are provided.

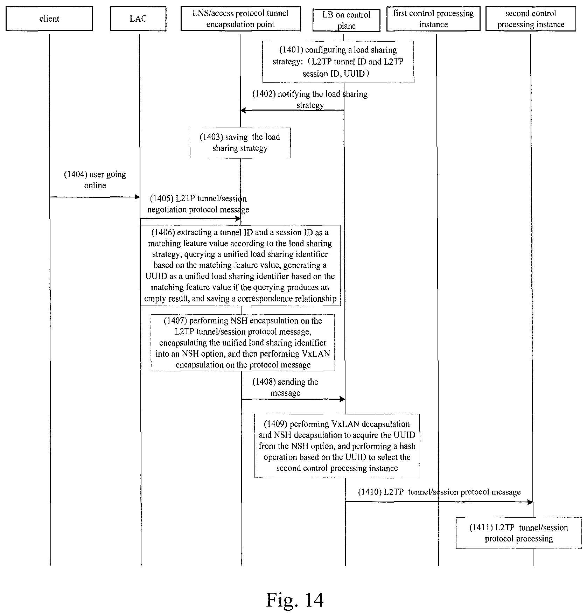

Fig. 14 is a flowchart showing an L2TP client access process provided by an embodiment of the present disclosure. This embodiment is based on the networking architecture shown in Fig. 13. As shown in Fig. 14, the process includes the following steps.

In step 1401, the LB 136 on the control plane configures a load sharing strategy. A matching strategy of the load sharing strategy is to extract a tunnel ID and a session ID in the LAC and LNS tunnel/session negotiation message as a matching feature value, and an action strategy thereof is to generate a UUID as a unified load sharing identifier.

In step 1402, the LB 136 on the control plane notifies the access protocol tunnel encapsulation point 135 of the load sharing strategy.

In step 1403, the access protocol tunnel encapsulation point 135 receives the load sharing strategy and saves it locally.

In step 1404, the client 131 initiates a user's going-online.

In step 1405, the LAC 133 initiates a tunnel/session negotiation with the LNS 135, and sends a negotiation protocol message to the LNS 135.

In step 1406, the LNS 135 extracts a tunnel ID and a session ID in the negotiation protocol message as a matching feature value according to the load sharing strategy, and queries a unified load sharing identifier based on the extracted tunnel ID and session ID. If the querying produces an empty result, a UUID is generated as a unified load sharing identifier based on the extracted tunnel ID and session ID, and a correspondence relationship between the tunnel ID and session ID and the UUID is saved.

In step 1407, the LNS 135 performs NSH encapsulation on the negotiation protocol message, encapsulates the UUID as the unified load sharing identifier into an NSH option, and then performs VxLAN encapsulation on the NSH encapsulated negotiation protocol message.

In step 1408, the LNS 135 sends the VxLAN+NSH encapsulated negotiation protocol message to the LB 136 on the control plane.

In step 1409, the LB 136 on the control plane performs VxLAN decapsulation and NSH decapsulation to obtain the negotiation protocol message and acquire the UUID from the NSH option, and performs a hash operation based on the UUID to select the second control processing instance 138.

In step 1410, the LB 136 on the control plane sends the negotiation protocol message to the second control processing instance 138.

In step 1411, the second control processing instance 138 performs L2TP tunnel/ session protocol processing based on the negotiation protocol message.

For different tunnels or sessions between the LAC and the LNS, because tunnel IDs and session IDs are different, corresponding UUIDs as unified load sharing identifiers are also different. Load of tunnel/session negotiation protocol messages can be shared to different control processing instances by using different UUIDs. An interactive processing flow is the same as the above flow and will not be repeated herein.

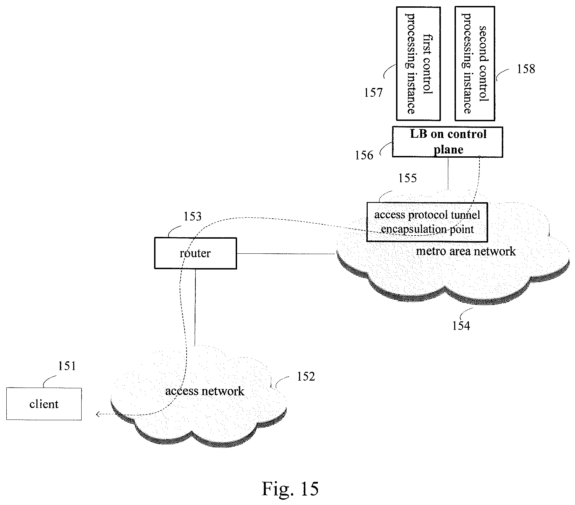

Fig. 15 is a diagram showing Layer three user access to deployed networking. As shown in Fig. 15, included are a client 151, an access network 152, an access router 153 of a Layer three access user located at an access layer, a metropolitan area network 154, an access protocol tunnel encapsulation point 155 located in the metro area network, a load balancer (LB) 156 on a control plane, a first control processing instance 157, and a second control processing instance 158. A router in the metropolitan area network is used as the access protocol tunnel encapsulation point 155 to perform tunnel encapsulation on the user's first Layer three IP message and send the encapsulated first Layer three IP message to a controller in the data center of the metropolitan area network for Layer three access processing.

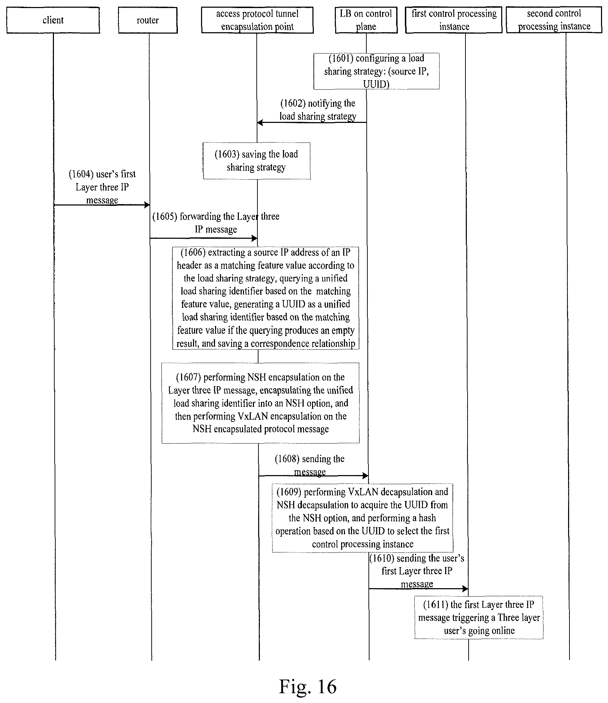

Fig. 16 is a schematic diagram showing a Layer three client access process provided by an embodiment of the present disclosure. This embodiment is based on the networking architecture shown in Fig. 15. As shown in Fig. 16, the process includes the following steps.

In step 1601, a load balancer (LB) 156 on a control plane configures a load sharing strategy. A matching strategy of the load sharing strategy is a source IP address of a Layer three IP header of a message, and an action strategy thereof is to generate a UUID as a unified load sharing identifier.

In step 1602, the LB 156 on the control plane sends the load sharing strategy to the access protocol tunnel encapsulation point 155.

In step 1603, the access protocol tunnel encapsulation point 155 receives the load sharing strategy and saves it locally.

In step 1604, the client 151 sends a first Layer three IP message.

In step 1605, the router 153 on an access side forwards the Layer three IP message.

In step 1606, the access protocol tunnel encapsulation point 155 extracts a source IP address of a Layer three IP header in the Layer three IP message as a matching feature value according to the load sharing strategy, and queries a unified load sharing identifier based on the matching feature value (the source IP address in this embodiment). If the querying produces an empty result, a UUID is generated as a unified load sharing identifier by using the matching feature value, and a correspondence relationship between the source IP address and the UUID is saved.

In step 1607, the access protocol tunnel encapsulation point 155 performs NSH encapsulation on the Layer three IP message, encapsulates the UUID as the unified load sharing identifier into an NSH option, and then performs VxLAN encapsulation on the NSH encapsulated Layer three IP message to generate a VxLAN+NSH encapsulated Layer three IP message.

In step 1608, the access protocol tunnel encapsulation point 155 sends the VxLAN+NSH encapsulated Layer three IP message to the LB 156 on the control plane.

In step 1609, the LB 156 on the control plane performs VxLAN decapsulation and NSH decapsulation on the VxLAN+NSH encapsulated Layer three IP message to obtain the Layer three IP message and acquire the UUID from the NSH option, and performs a hash operation based on the UUID to select a first control processing instance 157.

In step 1610, the LB 156 on the control plane sends the Layer three IP message to the selected first control processing instance 157.

In step 1611, the first control processing instance 157 performs Layer three user access processing based on the Layer three IP message.

For different Layer three access users, IP addresses of the users are different, and therefore corresponding UUIDs as unified load sharing identifiers are also different. Load of Layer three IP messages can be shared to different control processing instances by using different UUIDs. An interactive processing flow is the same as the above flow and will not be repeated herein.

As described above, according to the technical solutions of the present disclosure, load sharing on the load balancer (LB) on the control plane is simply realized by using UUIDs, which simplifies processing logic of the LB and ensures stability and performance of the LB module. Further, the stability and performance of the LB will not be affected by subsequent addition of functions.

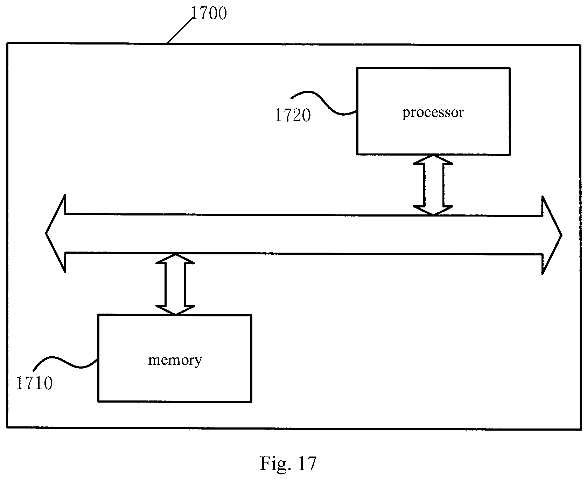

As shown in Fig. 17, an embodiment of the present disclosure provides a load sharing device 1700. The load sharing device 1700 includes a memory 1710 and a processor 1720. The memory 1710 stores thereon a program. The program, when read and executed by the processor 1720, implements a load sharing method. The load sharing method may be a load sharing method according to any one of the above embodiments.

An embodiment of the present disclosure provides a computer-readable storage medium. The computer-readable storage medium stores thereon one or more programs. The one or more programs may be executed by one or more processors to implement a load sharing method. The load sharing method may be a load sharing method according to any one of the above embodiments.

The computer-readable storage medium may be a medium capable of storing program codes such as a U disk, a read-only memory (ROM), a random access memory (RAM), a mobile hard disk, a magnetic disk, an optical disk and the like.

Although the present disclosure discloses the embodiments as above, the described is only embodiments provided for facilitating understanding of the present disclosure, and is not intended to limit the present disclosure. The patent protection scope of the present disclosure, however, is still subject to the scope defined by the appended claims.

### Industrial applicability

Compared with a related art in which an LB on a control plane selects a control processing instance based on an access protocol message and a load sharing strategy, the solutions adopted in the embodiments of the present disclosure greatly simplifies processing logic of the LB on the control plane, and improves performance of the LB on the control plane. In addition, when a new load sharing strategy is added, the LB on the control plane in the present disclosure does not need to be modified and it still selects a control processing instance based on a unified load sharing identifier. The stability of the LB on the control plane is thus improved.

## Claims

1. A load sharing method, wherein the method includes:
acquiring, by an access protocol tunnel encapsulation point, a load sharing strategy from a load balancer on a control plane;
receiving (201), by the access protocol tunnel encapsulation point, an access protocol message;
acquiring, by the access protocol tunnel encapsulation point, a matching feature value according to a matching strategy of the load sharing strategy, and determining a unified load sharing identifier based on the matching feature value; and
encapsulating (202), by the access protocol tunnel encapsulation point, the unified load sharing identifier and the access protocol message to generate a tunnel encapsulated access protocol message, and sending the tunnel encapsulated access protocol message to the load balancer;
wherein the load sharing strategy comprises an action strategy, and the action strategy comprises a generation type for generating the unified load sharing identifier based on the matching feature value.

2. The load sharing method according to claim 1, wherein the matching feature value includes one or a combination of the following: a message feature, a user feature, and a repeater feature.

3. The load sharing method according to claim 1, wherein the matching feature value has a priority inherited from a priority of a load sharing strategy to which the matching strategy belongs, wherein the matching feature value is generated according to the matching strategy.

4. The load sharing method according to claim 1, wherein the determining of the unified load sharing identifier based on the matching feature value includes:
if the matching feature value of the access protocol message has a corresponding unified load sharing identifier, acquiring the unified load sharing identifier corresponding to the matching feature value based on the matching feature value;
if none of matching feature values of the access protocol message is found to have a corresponding unified load sharing identifier, generating the unified load sharing identifier according to an action strategy of the load sharing strategy to which the matching strategy according to which the matching feature value is generated belongs, and saving a correspondence relationship between the matching feature value and the generated unified load sharing identifier.

5. The load sharing method according to claim 4, wherein the acquiring of the unified load sharing identifier corresponding to the matching feature value based on the matching feature value includes:
querying from a strategy module the unified load sharing identifier corresponding to the matching feature value in an order of from a higher-priority matching feature value to a lower-priority matching feature value, and ending the querying after a corresponding unified load sharing identifier is acquired from the strategy module for the first time.

6. The load sharing method according to claim 4, wherein the generating of the unified load sharing identifier according to the action strategy of the load sharing strategy to which the matching strategy according to which the matching feature value is generated belongs includes:
generating the unified load sharing identifier according to an action strategy of a load sharing strategy to which a matching strategy belongs, and a highest-priority matching feature value is generated according to the matching strategy.

7. An access protocol tunnel encapsulation point, comprising:
a strategy module, configured to acquire a load sharing strategy from a load balancer on a control plane, and store the load sharing strategy;
an encapsulating module, configured to receive an access protocol message, acquire the load sharing strategy from the strategy module, determine a unified load sharing identifier according to the load sharing strategy, encapsulate the unified load sharing identifier and the access protocol message to generate a tunnel encapsulated access protocol message, and send the tunnel encapsulated access protocol message to the load balancer.

8. A computer-readable storage medium, storing thereon one or more programs, wherein the one or more programs can be executed by one or more processors of an access protocol tunnel encapsulation point to implement the load sharing methods according to any one of claims 1 to 6.

9. A load sharing method, wherein the method includes:
configuring, by a load balancer on a control plane, a load sharing strategy, and sending, by the load balancer, the load sharing strategy to an access protocol tunnel encapsulation point;
receiving (302), by a load balancer on a control plane, a tunnel encapsulated access protocol message from the access protocol tunnel encapsulation point, decapsulating the tunnel encapsulated access protocol message to obtain a unified load sharing identifier and an access protocol message, selecting a control processing instance based on the unified load sharing identifier, and sending the access protocol message to the selected control processing instance; and
wherein the load sharing strategy comprises an action strategy, and the action strategy comprises a generation type for generating the unified load sharing identifier based on the matching feature value.

10. The load sharing method according to claim 9, wherein the selecting of the control processing instance based on the unified load sharing identifier includes:
processing the unified load sharing identifier by using a preset load sharing algorithm, and then selecting the control processing instance based on a processing result.

11. The load sharing method according to claim 9, wherein the processing of the unified load sharing identifier by using the preset load sharing algorithm includes: performing a hash operation on the unified load sharing identifier.

12. The load sharing method according to claim 9, wherein the load sharing strategy includes a matching strategy, the matching strategy including a strategy for extracting a matching feature value.

13. The load sharing method according to claim 12, wherein the matching feature value includes one or a combination of the following: a message feature, a user feature, and a repeater feature.

14. The load sharing method according to claim 9, wherein configured is one or more load sharing strategies, each of the load sharing strategies having a priority attribute.

15. A load balancer on a control plane, comprising:
a control module, configured to configure a load sharing strategy and send the load sharing strategy to an access protocol tunnel encapsulation point configuring;
a selecting module, configured to receive a tunnel encapsulated access protocol message from the access protocol tunnel encapsulation point, decapsulate the tunnel encapsulated access protocol message to obtain a unified load sharing identifier and an access protocol message, select a control processing instance based on the unified load sharing identifier, and sends the selected control processing instance and the access protocol message to the forwarding module; and
a forwarding module, configured to send the access protocol message to the control processing instance selected by the selecting module;
wherein the load sharing strategy comprises an action strategy, and the action strategy comprises a generation type for generating the unified load sharing identifier based on the matching feature value.

16. A computer-readable storage medium, storing thereon one or more programs, wherein the one or more programs can be executed by one or more processors of a load balancer on a control plane to implement the load sharing methods according to any one of claims 9 to 14.

17. A load sharing system, **characterized by** including: the access protocol tunnel encapsulation point according to claim 7 and the load balancer on a control plane according to claim 15.

## Patentansprüche

1. Lastverteilungsverfahren, wobei das Verfahren einschließt:
Erfassen, durch einen Zugriffsprotokolltunnel-Verkapselungspunkt, einer Lastverteilungsstrategie von einem Load Balancer auf einer Steuerebene;
Empfangen (201), durch den Zugriffsprotokolltunnel-Verkapselungspunkt, einer Zugriffsprotokollnachricht;
Erfassen, durch den Zugriffsprotokolltunnel-Verkapselungspunkt, eines Abgleichsmerkmalswerts gemäß einer Abgleichsstrategie der Lastverteilungsstrategie und Bestimmen einer vereinheitlichten Lastverteilungskennung basierend auf dem Abgleichsmerkmalswert und
Verkapseln (202), durch den Zugriffsprotokolltunnel-Verkapselungspunkt, der vereinheitlichten Lastverteilungskennung und der Zugriffsprotokollnachricht, um eine tunnelverkapselte Zugriffsprotokollnachricht zu erzeugen, und Senden der tunnelverkapselten Zugriffsprotokollnachricht an den Load Balancer;
wobei die Lastverteilungsstrategie eine Aktionsstrategie umfasst und die Aktionsstrategie einen Erzeugungstyp zum Erzeugen der vereinheitlichten Lastverteilungskennung basierend auf dem Abgleichsmerkmalswert umfasst.

2. Lastverteilungsverfahren nach Anspruch 1, wobei der Abgleichsmerkmalswert eines oder eine Kombination der Folgenden einschließt: ein Nachrichtenmerkmal, ein Benutzermerkmal und ein Repeater-Merkmal.

3. Lastverteilungsverfahren nach Anspruch 1, wobei der Abgleichsmerkmalswert eine Priorität aufweist, die von einer Priorität einer Lastverteilungsstrategie geerbt ist, zu der die Abgleichsstrategie gehört, wobei der Abgleichsmerkmalswert gemäß der Abgleichsstrategie erzeugt wird.

4. Lastverteilungsverfahren nach Anspruch 1, wobei das Bestimmen der vereinheitlichten Lastverteilungskennung basierend auf dem Abgleichsmerkmalswert einschließt:
wenn der Abgleichsmerkmalswert der Zugriffsprotokollnachricht eine entsprechende vereinheitlichte Lastverteilungskennung aufweist, Erfassen der vereinheitlichten Lastverteilungskennung, die dem Abgleichsmerkmalswert entspricht, basierend auf dem Abgleichsmerkmalswert;
wenn für keinen der Abgleichsmerkmalswerte der Zugriffsprotokollnachricht eine entsprechende vereinheitlichte Lastverteilungskennung gefunden wird, Erzeugen der vereinheitlichten Lastverteilungskennung, zu der der erzeugte Abgleichsmerkmalswert gehört, und Speichern einer Korrespondenzbeziehung zwischen dem Abgleichsmerkmalswert und der erzeugten vereinheitlichten Lastverteilungskennung.

5. Lastverteilungsverfahren nach Anspruch 4, wobei das Erfassen der vereinheitlichten Lastverteilungskennung, die dem Abgleichsmerkmalswert entspricht, basierend auf dem Abgleichsmerkmalswert einschließt:
Abfragen, von einem Strategiemodul, der vereinheitlichten Lastverteilungskennung, die dem Abgleichsmerkmalswert entspricht, in einer Reihenfolge von einem Abgleichsmerkmalswert mit höherer Priorität zu einem Abgleichsmerkmalswert mit niedrigerer Priorität und Beenden des Abfragens, nachdem eine entsprechende vereinheitlichte Lastverteilungskennung zum ersten Mal vom Strategiemodul erfasst wird.

6. Lastverteilungsverfahren nach Anspruch 4, wobei das Erzeugen der vereinheitlichten Lastverteilungskennung gemäß der Aktionsstrategie der Lastverteilungsstrategie, zu der die Abgleichsstrategie gehört, gemäß der der Abgleichsmerkmalswert erzeugt wird, einschließt:
Erzeugen der vereinheitlichten Lastverteilungskennung gemäß einer Aktionsstrategie einer Lastverteilungsstrategie, zu der eine Abgleichsstrategie gehört, und ein Abgleichsmerkmalswert höchster Priorität wird gemäß der Abgleichsstrategie erzeugt.

7. Zugriffsprotokolltunnel-Verkapselungspunkt, umfassend:
ein Strategiemodul, das konfiguriert ist, um eine Lastverteilungsstrategie von einem Load Balancer auf einer Steuerebene zu erfassen und die Lastverteilungsstrategie zu speichern;
ein Verkapselungsmodul, das konfiguriert ist, um eine Zugriffsprotokollnachricht zu empfangen, die Lastverteilungsstrategie vom Strategiemodul zu erfassen, eine vereinheitlichte Lastverteilungskennung gemäß der Lastverteilungsstrategie zu bestimmen, die vereinheitlichte Lastverteilungskennung und die Zugriffsprotokollnachricht zu verkapseln, um eine tunnelverkapselte Zugriffsprotokollnachricht zu erzeugen, und die tunnelverkapselte Zugriffsprotokollnachricht an den Load Balancer zu senden.

8. Computerlesbares Speicherungsmedium, auf dem ein oder mehrere Programm(e) gespeichert ist/sind, wobei das eine oder die mehreren Programm(e) durch einen oder mehrere Prozessor(en) eines Zugriffsprotokolltunnel-Verkapselungspunkts ausgeführt werden kann/können, um die Lastverteilungsverfahren nach einem der Ansprüche 1 bis 6 zu implementieren.

9. Lastverteilungsverfahren, wobei das Verfahren einschließt:
Konfigurieren, durch einen Load Balancer auf einer Steuerebene, einer Lastverteilungsstrategie und Senden, durch den Load Balancer, der Lastverteilungsstrategie an einen Zugriffsprotokolltunnel-Verkapselungspunkt;
Empfangen (302), durch einen Load Balancer auf einer Steuerebene, einer tunnelverkapselten Zugriffsprotokollnachricht vom Zugriffsprotokolltunnel-Verkapselungspunkt, Entkapseln der tunnelverkapselten Zugriffsprotokollnachricht, um eine vereinheitlichte Lastverteilungskennung und eine Zugriffsprotokollnachricht zu erhalten, Auswählen einer Steuerverarbeitungsinstanz basierend auf der vereinheitlichten Lastverteilungskennung und Senden der Zugriffsprotokollnachricht an die ausgewählte Steuerverarbeitungsinstanz; und
wobei die Lastverteilungsstrategie eine Aktionsstrategie umfasst und die Aktionsstrategie einen Erzeugungstyp zum Erzeugen der vereinheitlichten Lastverteilungskennung basierend auf dem Abgleichsmerkmalswert umfasst.

10. Lastverteilungsverfahren nach Anspruch 9, wobei das Auswählen der Steuerverarbeitungsinstanz basierend auf der vereinheitlichten Lastverteilungskennung einschließt:
Verarbeiten der vereinheitlichten Lastverteilungskennung durch Verwenden eines voreingestellten Lastverteilungsalgorithmus und anschließendes Auswählen der Steuerverarbeitungsinstanz basierend auf einem Verarbeitungsergebnis.

11. Lastverteilungsverfahren nach Anspruch 9, wobei das Verarbeiten der vereinheitlichten Lastverteilungskennung durch Verwenden des voreingestellten Lastverteilungsalgorithmus einschließt: Durchführen einer Hash-Operation an der vereinheitlichten Lastverteilungskennung.

12. Lastverteilungsverfahren nach Anspruch 9, wobei die Lastverteilungsstrategie eine Abgleichsstrategie einschließt, wobei die Abgleichsstrategie eine Strategie zum Extrahieren eines Abgleichsmerkmalswerts einschließt.

13. Lastverteilungsverfahren nach Anspruch 12, wobei der Abgleichsmerkmalswert eines oder eine Kombination der Folgenden einschließt: ein Nachrichtenmerkmal, ein Benutzermerkmal und ein Repeater-Merkmal.

14. Lastverteilungsverfahren nach Anspruch 9, wobei eine oder mehrere Lastverteilungsstrategie(n) konfiguriert ist/sind, wobei jede der Lastverteilungsstrategien ein Prioritätsattribut aufweist.

15. Load Balancer auf einer Steuerebene, umfassend:
ein Steuermodul, das konfiguriert ist, um eine Lastverteilungsstrategie zu konfigurieren und die Lastverteilungsstrategie an ein Konfigurieren eines Zugriffsprotokolltunnel-Verkapselungspunkts zu senden;
ein Auswahlmodul, das konfiguriert ist, um eine tunnelverkapselte Zugriffsprotokollnachricht vom Zugriffsprotokolltunnel-Verkapselungspunkt zu empfangen, die tunnelverkapselte Zugriffsprotokollnachricht zu entkapseln, um eine vereinheitlichte Lastverteilungskennung und eine Zugriffsprotokollnachricht zu erhalten, eine Steuerverarbeitungsinstanz basierend auf der vereinheitlichten Lastverteilungskennung auszuwählen und die ausgewählte Steuerverarbeitungsinstanz und die Zugriffsprotokollnachricht an das Weiterleitungsmodul zu senden; und
ein Weiterleitungsmodul, das konfiguriert ist, um die Zugriffsprotokollnachricht an die durch das Auswahlmodul ausgewählte Steuerverarbeitungsinstanz zu senden;
wobei die Lastverteilungsstrategie eine Aktionsstrategie umfasst und die Aktionsstrategie einen Erzeugungstyp zum Erzeugen der vereinheitlichten Lastverteilungskennung basierend auf dem Abgleichsmerkmalswert umfasst.

16. Computerlesbares Speicherungsmedium, auf dem ein oder mehrere Programm(e) gespeichert ist/sind, wobei das eine oder die mehreren Programm(e) durch einen oder mehrere Prozessor(en) eines Load Balancers auf einer Steuerebene ausgeführt werden kann/können, um die Lastverteilungsverfahren nach einem der Ansprüche 9 bis 14 zu implementieren.

17. Lastverteilungssystem, **dadurch gekennzeichnet, dass** es einschließt: den Zugriffsprotokolltunnel-Verkapselungspunkt nach Anspruch 7 und den Load Balancer auf einer Steuerebene nach Anspruch 15.

## Revendications

1. Procédé de partage de charge, dans lequel le procédé comporte :
l'acquisition, par un point d'encapsulation de tunnellisation de protocole d'accès, d'une stratégie de partage de charge provenant d'un équilibreur de charge sur un plan de commande ;
la réception (201), par le point d'encapsulation de tunnellisation de protocole d'accès, d'un message de protocole d'accès ;
l'acquisition, par le point d'encapsulation de tunnellisation de protocole d'accès, d'une valeur de caractéristique de mise en correspondance selon une stratégie de mise en correspondance de la stratégie de partage de charge, et la détermination d'un identifiant de partage de charge unifié sur la base de la valeur de caractéristique de mise en correspondance ; et
l'encapsulation (202), par le point d'encapsulation de tunnellisation de protocole d'accès, de l'identifiant de partage de charge unifié et du message de protocole d'accès pour générer un message de protocole d'accès encapsulé dans un tunnel, et l'envoi du message de protocole d'accès encapsulé dans un tunnel à l'équilibreur de charge ;
dans lequel la stratégie de partage de charge comprend une stratégie d'action, et la stratégie d'action comprend un type de génération pour générer l'identifiant de partage de charge unifié sur la base de la valeur de caractéristique de mise en correspondance.

2. Procédé de partage de charge selon la revendication 1, dans lequel la valeur de caractéristique de mise en correspondance comporte un ou une combinaison de ce qui suit : une caractéristique de message, une caractéristique utilisateur et une caractéristique de répéteur.

3. Procédé de partage de charge selon la revendication 1, dans lequel la valeur de caractéristique de mise en correspondance présente une priorité héritée d'une priorité d'une stratégie de partage de charge à laquelle la stratégie de mise en correspondance appartient, dans lequel la valeur de caractéristique de mise en correspondance est générée selon la stratégie de mise en correspondance.

4. Procédé de partage de charge selon la revendication 1, dans lequel la détermination de l'identifiant de partage de charge unifié sur la base de la valeur de caractéristique de mise en correspondance comporte :
si la valeur de caractéristique de mise en correspondance du message de protocole d'accès présente un identifiant de partage de charge unifié correspondant, l'acquisition de l'identifiant de partage de charge unifié correspondant à la valeur de caractéristique de mise en correspondance sur la base de la valeur de caractéristique de mise en correspondance ;
si aucune des valeurs de caractéristique de mise en correspondance du message de protocole d'accès ne présente d'identifiant de partage de charge unifié correspondant, la génération de l'identifiant de partage de charge unifié auquel appartient la valeur de caractéristique de mise en correspondance est générée, et l'enregistrement d'une relation de correspondance entre la valeur de caractéristique de mise en correspondance et l'identifiant de partage de charge unifié généré.

5. Procédé de partage de charge selon la revendication 4, dans lequel l'acquisition de l'identifiant de partage de charge unifié correspondant à la valeur de caractéristique de mise en correspondance sur la base de la valeur de caractéristique de mise en correspondance comporte :
l'interrogation, à partir d'un module de stratégie, de l'identifiant de partage de charge unifié correspondant à la valeur de caractéristique de mise en correspondance dans un ordre allant d'une valeur de caractéristique de mise en correspondance de priorité supérieure à une valeur de caractéristique de mise en correspondance de priorité inférieure, et la fin de l'interrogation après qu'un identifiant de partage de charge unifié correspondant a été acquis pour la première fois à partir du module de stratégie.

6. Procédé de partage de charge selon la revendication 4, dans lequel la génération de l'identifiant de partage de charge unifié selon la stratégie d'action de la stratégie de partage de charge à laquelle appartient la stratégie de mise en correspondance selon laquelle la valeur de caractéristique de mise en correspondance est générée, comporte :
la génération de l'identifiant de partage de charge unifié selon une stratégie d'action d'une stratégie de partage de charge à laquelle appartient une stratégie de mise en correspondance, et une valeur de caractéristique de mise en correspondance de priorité la plus élevée est générée selon la stratégie de mise en correspondance.

7. Point d'encapsulation de tunnellisation de protocole d'accès, comprenant :
un module de stratégie, configuré pour acquérir une stratégie de partage de charge à partir d'un équilibreur de charge sur un plan de commande, et stocker la stratégie de partage de charge ;
un module d'encapsulation, configuré pour recevoir un message de protocole d'accès, acquérir la stratégie de partage de charge à partir du module de stratégie, déterminer un identifiant de partage de charge unifié selon la stratégie de partage de charge, encapsuler l'identifiant de partage de charge unifié et le message de protocole d'accès pour générer un message de protocole d'accès encapsulé dans un tunnel, et envoyer le message de protocole d'accès encapsulé dans un tunnel à l'équilibreur de charge.

8. Support de stockage lisible par ordinateur, sur lequel sont stockés un ou plusieurs programmes, dans lequel le ou les programmes peuvent être exécutés par un ou plusieurs processeurs d'un point d'encapsulation de tunnellisation de protocole d'accès pour mettre en œuvre les procédés de partage de charge selon l'une quelconque des revendications 1 à 6.

9. Procédé de partage de charge, dans lequel le procédé comporte :
la configuration, par un équilibreur de charge sur un plan de commande, d'une stratégie de partage de charge, et l'envoi, par l'équilibreur de charge, de la stratégie de partage de charge à un point d'encapsulation de tunnellisation de protocole d'accès ;
la réception (302), par un équilibreur de charge sur un plan de commande, d'un message de protocole d'accès encapsulé dans un tunnel provenant du point d'encapsulation de tunnellisation de protocole d'accès, la décapsulation du message de protocole d'accès encapsulé dans un tunnel pour obtenir un identifiant de partage de charge unifié et un message de protocole d'accès, la sélection d'une instance de traitement de commande sur la base de l'identifiant de partage de charge unifié, et l'envoi du message de protocole d'accès à l'instance de traitement de commande sélectionnée ; et
dans lequel la stratégie de partage de charge comprend une stratégie d'action, et la stratégie d'action comprend un type de génération pour générer l'identifiant de partage de charge unifié sur la base de la valeur de caractéristique de mise en correspondance.

10. Procédé de partage de charge selon la revendication 9, dans lequel la sélection de l'instance de traitement de commande sur la base de l'identifiant de partage de charge unifié comporte :
le traitement de l'identifiant de partage de charge unifié à l'aide d'un algorithme de partage de charge prédéfini, puis la sélection de l'instance de traitement de commande sur la base d'un résultat de traitement.

11. Procédé de partage de charge selon la revendication 9, dans lequel le traitement de l'identifiant de partage de charge unifié à l'aide de l'algorithme de partage de charge prédéfini comporte : la réalisation d'une opération de hachage sur l'identifiant de partage de charge unifié.

12. Procédé de partage de charge selon la revendication 9, dans lequel la stratégie de partage de charge comporte une stratégie de mise en correspondance, la stratégie de mise en correspondance comportant une stratégie permettant d'extraire une valeur de caractéristique de mise en correspondance.

13. Procédé de partage de charge selon la revendication 12, dans lequel la valeur de caractéristique de mise en correspondance comporte un ou une combinaison de ce qui suit : une caractéristique de message, une caractéristique utilisateur et une caractéristique de répéteur.

14. Procédé de partage de charge selon la revendication 9, dans lequel une ou plusieurs stratégies de partage de charge sont configurées, chacune des stratégies de partage de charge présentant un attribut de priorité.

15. Équilibreur de charge sur un plan de commande, comprenant :
un module de commande, configuré pour configurer une stratégie de partage de charge et envoyer la stratégie de partage de charge à une configuration de point d'encapsulation de tunnellisation de protocole d'accès ;
un module de sélection, configuré pour recevoir un message de protocole d'accès encapsulé dans un tunnel provenant du point d'encapsulation de tunnellisation de protocole d'accès, décapsuler le message de protocole d'accès encapsulé dans un tunnel pour obtenir un identifiant de partage de charge unifié et un message de protocole d'accès, sélectionner une instance de traitement de commande sur la base de l'identifiant de partage de charge unifié, et envoyer l'instance de traitement de commande sélectionnée et le message de protocole d'accès au module de transfert ; et
un module de transfert, configuré pour envoyer le message de protocole d'accès à l'instance de traitement de commande sélectionnée par le module de sélection ;
dans lequel la stratégie de partage de charge comprend une stratégie d'action, et la stratégie d'action comprend un type de génération pour générer l'identifiant de partage de charge unifié sur la base de la valeur de caractéristique de mise en correspondance.

16. Support de stockage lisible par ordinateur, sur lequel sont stockés un ou plusieurs programmes, dans lequel le ou les programmes peuvent être exécutés par un ou plusieurs processeurs d'un équilibreur de charge sur un plan de commande pour mettre en œuvre les procédés de partage de charge selon l'une quelconque des revendications 9 à 14.

17. Système de partage de charge, **caractérisé en ce qu'il** comporte : le point d'encapsulation de tunnellisation de protocole d'accès selon la revendication 7 et l'équilibreur de charge sur un plan de commande selon la revendication 15.
